# EUROPEAN PATENT SPECIFICATION

(11) **EP 3 053 444 B1**
(45) Date of publication and mention of the grant of the patent: **11.04.2018**
(21) Application number: 15154120.8
(22) Date of filing: 06.02.2015
(51) Int. Cl.: A23C 9/12, A23C 9/142, A23C 19/076, A23C 19/09, A23C 9/123, A23C 9/13, A23C 19/028, A23C 19/05

(54) **Method for preparing concentrated fermented milk products and fresh cheeses**
Verfahren zur Herstellung von konzentrierten fermentierten Milchprodukten und frischen Käsen
Procédé de préparation de produits laitiers fermentés concentrés et de fromages à pâte fraîche

(43) Date of publication of application: 10.08.2016
(73) Proprietor: Tine SA, 0187 Oslo (NO)
(72) Inventor: Hoffmann, Tom, 1550 HØLEN (NO)
(74) Representative: Onsagers AS

(56) References cited:
- EP-A2- 1 020 120
- US-A- 4 341 801
- US-A1- 2014 017 357
- A Y. TAMIME ET AL: "The production of ?Labneh? by ultrafiltration: a new technology", INTERNATIONAL JOURNAL OF DAIRY TECHNOLOGY, vol. 42, no. 2, 1 May 1989 (1989-05-01), pages 35-39, XP055192814, ISSN: 1364-727X, DOI: 10.1111/j.1471-0307.1989.tb02150.x

## Description

### Field of the invention

The present invention relates to a method of preparing sour dairy products wherein the amount of acid whey as a by-product is reduced. In particular, the sour dairy products are concentrated fermented milk (ref. Codex standard for fermented milks, CODEX STAN 243-2003). Concentrated fermented milk is fermented milk where the protein content has been increased to minimum 5.6 %. That is, all kinds of strained yoghurts including Greek yoghurt, labneh and skyr are included. The different concentrated fermented milks are characterized by the starter culture used for fermentation. The sour dairy products also include fresh cheeses such as cream cheeses and quark, and other products which are concentrated after fermentation.

### Background of the invention

For a lot of sour dairy products increased protein content is desirable. This applies to most types of yoghurt, quark, skyr, labneh, cream cheeses and more.

Increased protein content has traditionally been achieved by addition of different dried milk powders or by separating the whey from the milk products after fermentation, i.e. straining. Addition of milk powders has led to undesirable high content of lactose, while straining provides large amounts of sour/acid whey. Whey produced during straining is roughly as acidic as orange juice, and contains mostly lactose and lactic acid, but also some minerals and a small amount of protein.

Filtration technologies have enabled concentration of the protein percentage in milk by means of ultrafiltration (UF) and microfiltration (MF) without increasing the content of lactose. Concentration of the milk before fermentation provides a permeate consisting of sweet whey which has a much wider application than acid whey, in that it is used in various products such as protein supplements and food ingredients. However, such production affects the final product with regard to consistency, taste and calcium content. That is, the higher protein content in the concentrated milk, the more affected is the product.

It is possible to combine partial concentration of milk prior to fermentation and concentration after fermentation by straining. An increased protein content of the milk result in an increased fermentation time as the protein act as a buffer. The dominant method of concentrating the fermented milk is use of centrifugation. However, centrifugation has a limitation with regard to protein content of the milk that is being centrifuged. This limitation is maximum 4 % of protein in milk. Thus, the percentage of acid whey generated is not substantially reduced in this way.

The method of the present invention enables concentration of the milk to a protein content above 4 % before fermentation, and subsequent centrifugation after fermentation. This results in considerable reduction in the amount of acid whey.

Furthermore, the method of the present invention enables proper fermentation of the milk in shorter time than by using known methods.

All yoghurts are produced from sour milk prepared by use of yoghurt culture, and with increased content of milk solids. Yoghurt culture is a composition of bacteria producing lactic acid, e.g. *Streptococcus salivarius* subsp. *thermophilius* and *Lactobacillus delbrueckii* subsp. *bulgaricus.* In addition probiotic cultures can be added. Typically, about 1-1.5% of culture is added, or about 0.015-0.02% DVS (direct vat starter) culture.

In order to increase the milk solids of yoghurt, all the above mentioned alternatives may be used. That is, addition of dried milk powders, concentration of the protein content in milk by membrane filtration, or straining.

Greek yoghurt is a thick and protein-packed version of yoghurt. Greek yogurt is strained after cultures have been added to the milk and the acidification has been completed. In home kitchens, this can be done with a cloth, while in industrial operations the whey is typically removed with mechanical separators that use centrifugal force or by filtering techniques. Typically, for every three or four kilograms of milk, only one kilogram of Greek yoghurt is produces. The rest becomes acid whey.

The Greek yoghurt market has become one of the biggest success stories in food over the past few years. For instance, in New York the total yoghurt production has been nearly tripled between 2007 and 2013.

Acid whey is also created during manufacturing of fresh cheeses like cream cheeses and quark, which includes straining.

Acid whey cannot simply be dumped. Acid whey is toxic to the natural environment. If it reaches waterways, it has the potential to deplete water oxygen levels and kill fish.

The large amounts of acid whey caused by the production of strained yoghurts and fresh cheeses are a challenge to the producers. The acid whey would have to be cleaned by costly processes or be disposed as waste, or may in some degree be mixed into feed or fertilizer, or be used in production of bioethanol.

Thus, acid whey is a by-product of yoghurt and fresh cheese production processes of low value which is a challenge to the dairy industry.

Now, it is surprisingly found that by concentrating the protein content of milk to above 4 % before fermentation, and adding acid whey recirculated from the straining step to the milk concentrate before or after fermentation, concentrated fermented milk products and fresh cheeses may be prepared through centrifugation, while the amount of acid whey to be discharged is considerably reduced compared to known methods.

Alternatively, a non-acidified liquid like a permeate obtained from UF of milk (an UF permeate) or water can be added to the milk concentrate with protein content above 4 % instead of acid whey. This will also allow preparation of concentrated fermented milk products -and fresh cheese through centrifugation. However, this alternative will not reduce the fermentation time and the amount of acid whey to be discharged

A Y. TAMIME ET AL: "The production of Labneh by ultrafiltration: a new technology",INTERNATIONAL JOURNAL OF DAIRY TECHNOLOGY, vol. 42, no. 2, 1 May 1989 discloses a method for preparing concentrated yoghurt by ultrafiltration of milk before fermentation.

US 4 341 801 A discloses a method for preparing cream cheese using ultrafiltration to provide a cheese pre-mix which is cultured to obtain cheese without generating whey.

### Summary of the invention

It is a main object of the present invention to provide a method for making sour dairy products like concentrated fermented milk products including all kinds of strained yoghurt such as Greek yoghurt, labneh and skyr, as well as fresh cheeses such as cream cheeses and quark, and other products which are concentrated after fermentation, wherein the amount of the acid whey to be discharged is considerably reduced.

Another object of the present invention is to provide a method for making sour dairy products like concentrated fermented milk products including all kinds of strained yoghurt such as Greek yoghurt, labneh and skyr, as well as fresh cheeses such as cream cheeses and quark, and other products which are concentrated after fermentation, wherein milk concentrated to protein content above 4% can be subjected to centrifugation in the straining step.

Still another object of the present invention is to provide a method for making sour dairy products like concentrated fermented milk products including all kinds of strained yoghurt such as Greek yoghurt, labneh and skyr, as well as fresh cheeses such as cream cheeses and quark, and other products which are concentrated after fermentation, wherein the fermentation time is reduced.

Yet another object of the present invention is to provide a method for making sour dairy products like concentrated fermented milk products including all kinds of strained yoghurt such as Greek yoghurt, labneh and skyr, as well as fresh cheeses such as cream cheeses and quark, and other products which are concentrated after fermentation, with high protein content.

These and other objects are obtained by the method as defined in the accompanying claims.

### Detailed description of the drawings

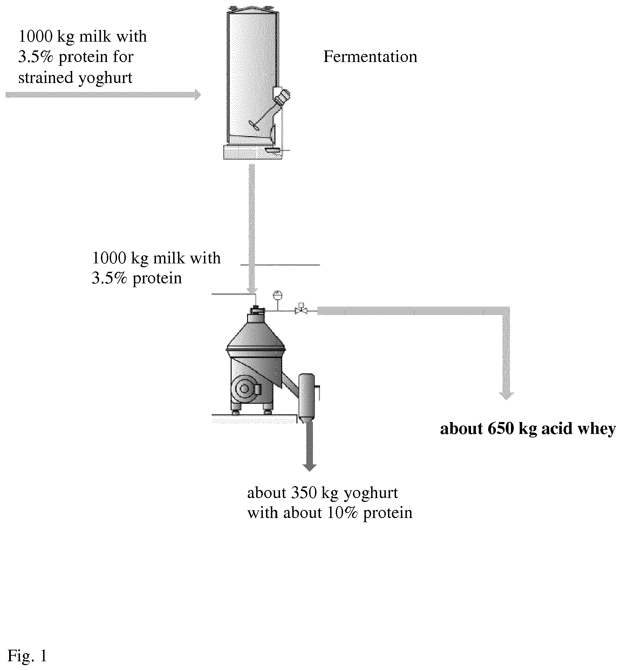

Fig. 1 illustrates a traditional method of preparing sour dairy products like concentrated fermented milk products and fresh cheeses. It is exemplified by production of strained yoghurt. The amounts mentioned should be seen as an example and may vary among the different producers and intended products.

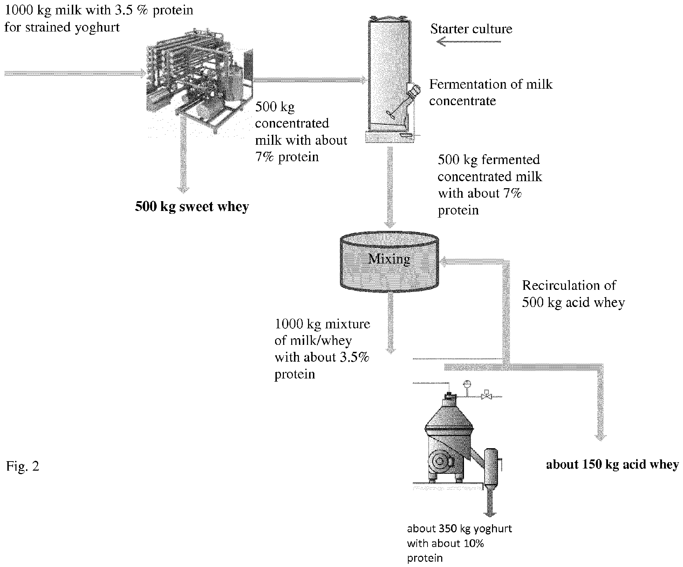

Fig. 2 illustrates a first alternative of the method of preparing sour dairy products like concentrated fermented milk products and fresh cheeses according to the present invention. It is exemplified by production of strained yoghurt. The amounts and concentration factors should be seen as an example and may vary among the different producers and the intended products.

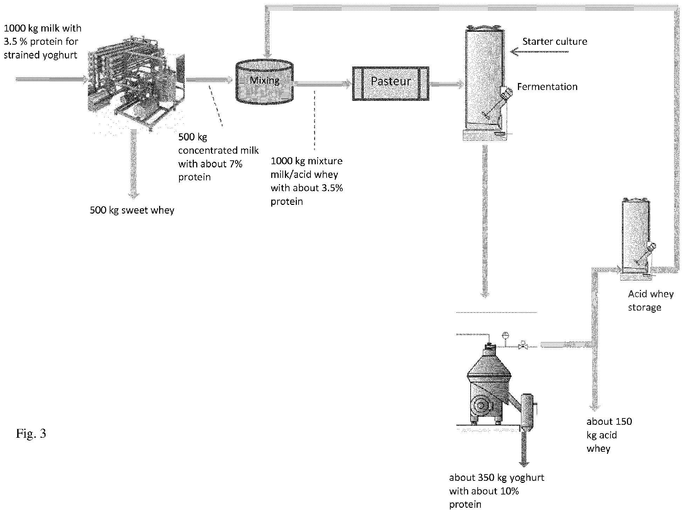

Fig. 3 illustrates a second alternative of the method of preparing sour dairy products like concentrated fermented milk products and fresh cheeses according to the present invention. It is exemplified by production of strained yoghurt. The amounts and concentration factors should be seen as an example and may vary among the different producers and the intended products.

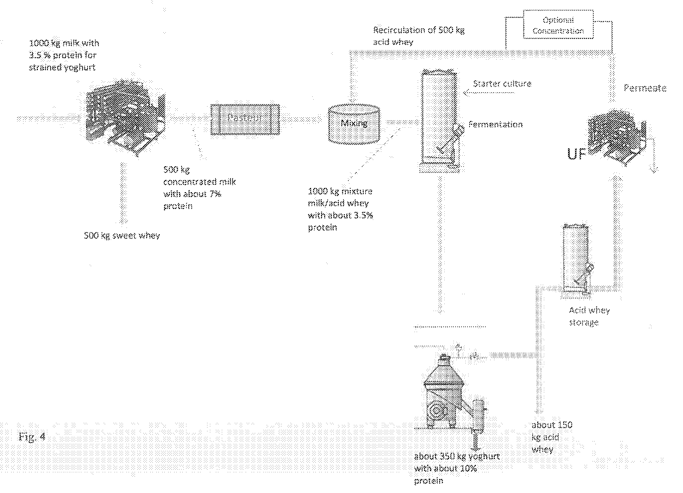

Fig. 4 illustrates a third alternative of the method of preparing sour dairy products like concentrated fermented milk products and fresh cheeses according to the present invention. It is exemplified by production of strained yoghurt. The amounts and concentration factors should be seen as an example and may vary among the different producers and the intended products.

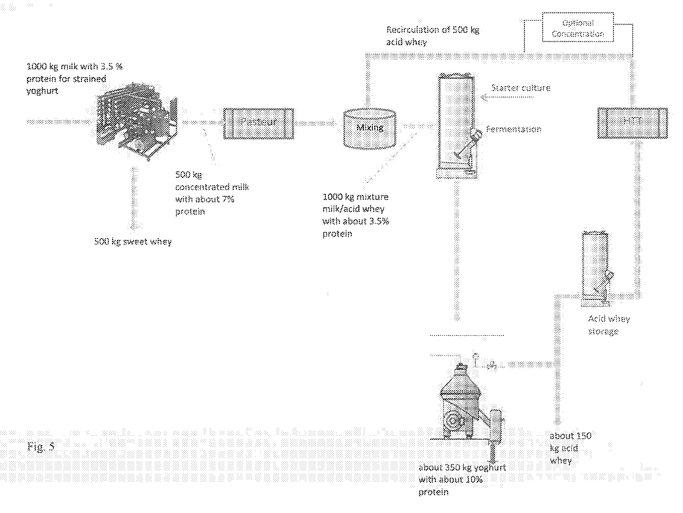

Fig. 5 illustrates a fourth alternative of the method of preparing sour dairy products like concentrated fermented milk products and fresh cheeses according to the present invention. It is exemplified by production of strained yoghurt. The amounts and concentration factors should be seen as an example and may vary among the different producers and the intended products.

### Detailed description of the invention

The present invention provides a method of producing a sour dairy product comprising the steps of:
a) providing milk;
b) concentrating the protein content of the milk of step a) by removal of sweet whey by means of microfiltration (MF), ultra filtration (UF) or any combination of MF and UF;
c) providing acid whey;
d)
   - subjecting the milk concentrate obtained in step b) to fermentation by addition of a bacterial culture, and mixing the thereby obtained fermented milk concentrate with the acid whey obtained in step c); or
   - mixing the milk concentrate obtained in step b) with the acid whey obtained in step c) and subjecting the thereby obtained mixture to fermentation by addition of a bacterial culture;
e) transferring the sour milk/acid whey mixture obtained in step d) to a separator wherein sour dairy product and acid whey are separated; and
f) recirculating a part of the acid whey obtained in step e) to mixing with the milk concentrate before or after fermentation in step d), and discharging the remaining part of the acid whey obtained in step e).

As defined herein milk is any type of milk produced by any milk animals. Most common milk animals are cattle or cows, buffaloes, goats, sheep and camels. Less common milk animals, but included herein, are yaks, horses, reindeers and donkeys.

The major proteins in milk are casein and whey proteins. In milk from cattle the ratio of casein to whey proteins is typically 80 to 20.

The milk, the milk concentrate or the mixture of milk concentrate and acid whey of the method according to the present invention is subjected to pasteurisation.

According to one embodiment of the invention, the milk provided in step a) of the method is pasteurised.

According to another embodiment of the invention, the concentrated milk obtained in step b) is subjected to pasteurisation before entering the fermentation tank or mixing with the acid whey.

According to yet another embodiment of the invention, the mixture of concentrated milk and acid whey obtained according to the second alternative of step d) is subjected to pasteurisation before entering the fermentation.

In order to enable use of acid whey in the alternative of the present invention wherein the milk concentrate and acid whey are mixed before entering the fermentation tank, removal of bacteriophages to an acceptable level is required. This can be obtained by pasteurisation of the mixture before entering the fermentation tank, or by subjecting the acid whey to an appropriate treatment before mixing with the milk concentrate. That is, the acid whey is subjected to a treatment which enables a reduction of bacteriophages of ≥ log 7, preferably ≥ log 9.

Alternative treatments of acid whey are ultrafiltration (UF), heat treatment and any other treatment resulting in reduction of bacteriophages to an acceptable level. Any combination of the said treatments is included in the group of alternative treatments within the scope of the present invention.

The ultrafiltration (UF) of acid whey is carried out by using membranes with pore size from 1 kDa to 500 kDa, preferably from 20 kDa to 300 kDa.

In the case wherein heat treatment is used, it is carried out at temperatures from 70 °C to 100 °C in a period of time from 1 second to 20 minutes provided that the lowest temperature requires the longest period of time and vice versa. According to one embodiment, the heat treatment is carried out at a temperature of 100 or 90 °C for 1 second. According to another embodiment, the heat treatment is carried out at a temperature of 70 °C for 20 minutes.

The microfiltration (MF) of milk in step b) of the presently invented method is carried out by using membranes with pore size from 0.05 µm to 0.2 µm. The ultrafiltration (UF) of milk in step b) of the method is carried out by using membranes with pore size from 1 kDa to 500 kDa. Any combinations of MF and UF using membranes with pore sizes as mentioned above may be used in order to concentrate the milk as indicated in step b) of the invented method.

According to one embodiment of the invention, the MF system of TINE named Cold Permeate System™ is used in step b) of the present method. The said MF system is disclosed in WO 2011/115498 A1 and WO 2014/072284 A1.

The sweet whey removed in step b) of the method may be subjected to further ultrafiltration (UF) before final treatment and application as for instance protein supplements and food ingredients.

According to one embodiment of the present invention, the protein content of the milk concentrate obtained in step b) is in the range from 4 % to 15 %.

According to a preferred embodiment of the present invention, the protein content of the milk concentrate obtained in step b) is in the range from 6 % to 12 %.

According to another preferred embodiment of the present invention, the protein content of the milk concentrate obtained in step b) is in the range from 8 % to 12 %.

In one aspect of the present invention, the acid whey provided in step c) is a by-product from production of sour dairy products.

The bacterial culture added in step d) to provide fermentation, is a starter culture of lactic acid bacteria.

In one aspect of the present invention, strained yoghurt products are produced. The bacterial culture used in step d) of the method when producing yoghurt is a yoghurt culture typically comprising cultures of *Streptococcus salivarius* subsp. *thermophilius, Lactobacillus delbrueckii* subsp. *bulgaricus*,. In addition, probiotic cultures can be added.

In another aspect of the present invention, fresh cheese products such as cream cheese and quark are produced. The bacterial culture used in step d) of the method when producing fresh cheese is a mesophile O culture comprising only the acid producers *Lactococcus lactis* subsp. *lactis* and *Lactococcus lactis* subsp. *cremoris* (typically in production of cream cheeses), or a mesophile DL culture which in addition to the said acid produces comprises the aroma producers *Lactococcus lactis* subsp. *lactis biovarlactis* and *Leuconostoc mesenteroides* subsp. *cremoris* (typically in production of quark).

Furthermore, in the case of producing cream cheese and quark according to the present method, rennet may be added together with the bacterial culture in step d).

The bacterial culture and rennet are added in conventional amounts.

Typically, about 1-1.5% of culture is added, or about 0.015-0.02% DVS (direct vat starter) culture.

The fermentation in step d) is carried out in a time sufficient to obtain proper acidification. That is, target pH is in the range from 4.0 to 5.2, preferably in the range from 4.5 to 4.7, most preferable 4.6.

According to one embodiment as outlined in the first alternative of step d) of the present method, the milk concentrate obtained in step b) is fermented by addition of a bacterial culture, and thereafter the fermented milk concentrate is mixed with acid whey before transferring the mixture obtained to the separator in step e). The amounts of concentrated fermented milk and acid whey are adapted to provide a protein content of the mixture of ≤ 4 %. By adjusting the protein content to a level of ≤ 4 %, conventional nozzle type centrifugation means used in dairies, i.e. separators can be used.

According to another embodiment as outlined in the second alternative of step d) of the present method, an appropriate amount of acid whey having an acceptable level of bacteriophages is mixed with concentrated milk and added together with a bacterial culture to the fermentation tank. The amount of acid whey to be added is dependent on the protein content of the milk concentrate. That is, an amount of acid whey capable of bringing the protein content of the milk concentrate to an acceptable level to the separator, i.e. 4% or less. The addition of acid whey contributes to fulfilling the acidification of the milk concentrate in less time than by using culture alone. In this way the production time of the method according to the invention is reduced compared to traditional methods. If desired, the acidity of the acid whey can be increased by concentrating the acid whey by for instance reverse osmosis (RO). Consequently, the fermentation time is further reduced as well as the amount of acid whey to be discharged.

The separators used in step e) of the method according to the invention are typically a GEA Westfalia nozzle type centrifuge. For production of yoghurt, for instance separators of type KDB, KDC or similar are used, while separators of type KSA, KSD, KSE or similar are used for production of fresh cheeses.

During step e) of the method according to present invention the final sour dairy product and acid whey are separated in a manner known per se.

The the acid whey separated off in step e) of the present method is partly recirculated to the mixing with the milk concentrate before or after fermentation in step d), and the remaining part of acid whey is discharged. According to one embodiment of the present invention, the acid whey separated off in step e) is partly recirculated to mixing with the concentrated fermented milk, and the remaining part is discharged. According to another embodiment of the present invention, the acid whey separated off in step e) is partly recirculated to mixing with the milk concentrate obtained in step d) which is further subjected to fermentation, and the remaining part is discharged.

The acid whey discharged in step f) of the method of the present invention may be subjected to reverse osmosis (RO) or nanofiltration (NF) before disposal.

In one aspect of the present invention, the ratio of milk provided in step a) to remaining part of the acid whey discharged in step f) is in the range from 10:1 to 10:8. In another aspect of the present invention, the ratio of milk provided in step a) to remaining part of the acid whey discharged in step f) is in the range from 10:2 to 10:6. In still another aspect of the present invention, the ratio of milk provided in step a) to remaining part of the acid whey discharged in step f) is in the range from 10:4 to 10:5.

The present invention is providing a method of manufacturing sour dairy products selected from the group consisting of concentrated fermented milk, strained yoghurt, Greek yoghurt, labneh, skyr, fresh cheeses, cream cheese, quark and other products which are concentrated after fermentation.

According to one embodiment of the invention, the method enables manufacturing of sour dairy products with a protein content in the range from 2.5 % to 15 %.

According to a preferred embodiment of the present invention the sour dairy product prepared is a concentrated fermented milk product selected from the group consisting of strained yoghurt, Greek yoghurt, labneh and skyr. More preferable, the sour dairy product prepared by the method of the present invention is strained yoghurt, most preferably Greek yoghurt.

In one aspect of the present invention, a method for making sour dairy products, wherein the amount of the by-product acid whey is reduced by 80 % compared to known methods is provided. According to another aspect, the method of the present invention provides 70 % reduction of acid whey compared to known methods. According to still another aspect, the method of the present invention provides 60 % reduction of acid whey compared to known methods. According to yet another aspect, the method of the present invention provides 60 % to 20 % reduction of acid whey compared to known methods.

In one aspect of the present invention, a liquid like a permeate obtained from UF (an UF permeate) or water can be added to the milk concentrate having a protein content above 4 %, instead of acid whey. This aspect will allow preparation of concentrated fermented milk products and fresh cheese by use of conventional separators as mentioned above. However, the challenges with large amounts of acid whey remain.

The invention is explained in more detail in the examples below.

### Examples

### Reference example

According to traditional production of strained yoghurt, e.g. Greek yoghurt, the following method is used.

Milk (1000 kg) having a protein content of 3.5 % is provided and fed into a fermentation tank together with a yoghurt culture. Then, fermented milk (1000 kg) having a protein content of 3.5 % is fed into a separator. About 350 kg strained yoghurt having a protein content of about 10 % is produced. About 650 kg acid whey is produced as a by-product.

This process is visualised in Fig. 1.

### Example 1

Milk (1000 kg) having a protein content of 3.5 % is provided and the protein content of the milk is concentrated to about 7% by removal of 500 kg sweet whey by use of UF. The concentrated milk (500 kg) is fed into a fermentation tank together with a yoghurt culture. After fermentation, the fermented milk (500 kg) having a protein content of about 7 % is mixed with acid whey (500 kg) recirculated from the separator. 1000 kg of the obtained mixture of fermented milk/acid whey having a protein content of about 3.5 % is then fed into a separator. About 350 kg strained yoghurt having a protein content of about 10 % is produced. Furthermore, about 650 kg acid whey is produced as a by-product, of which 500 kg is recirculated into the process (i.e. mixed with concentrated fermented milk) and about 150 kg is discharged as waste.

This process is visualised in Fig. 2.

Compared to the traditional method of producing strained yoghurt as outlined in the Reference Example above, the present method according to the invention, result in about 77 % reduction of waste acid whey.

### Example 2

Milk (1000 kg) having a protein content of 3.5 % is provided and the protein content of the milk is concentrated to about 7% by removal of 500 kg sweet whey by use of UF. The concentrated milk (500 kg) is fed into a mixing unit, e.g. an inline mixer or a mixing tank, together with acid whey (500 kg) to obtain a mixture (1000 kg) of concentrated milk/acid whey having a protein content of about 3.5 %. The mixture is subjected to pasteurization and fed into a fermentation tank together with a yoghurt culture. After fermentation, the mixture (1000 kg) is fed into a separator. About 350 kg strained yoghurt having a protein content of about 10 % is produced. Furthermore, about 650 kg acid whey is produced as a by-product, of which 500 kg is recirculated into the process (i.e. mixed with concentrated milk) and about 150 kg is discharged as waste.

This process is visualised in Fig. 3.

Compared to the traditional method of producing strained yoghurt as outlined in the Reference Example above, the present method according to the invention, result in about 77 % reduction of waste acid whey.

### Example 3

Milk (1000 kg) having a protein content of 3.5 % is provided and the protein content of the milk is concentrated to about 7% by removal of 500 kg sweet whey by use of UF. The concentrated milk (500 kg) is subjected to pasteurisation and fed into a mixing unit, e.g. an inline mixer or a mixing tank, together with acid whey (500 kg) which has been subjected to UF in order to remove bacteriophages to an acceptable level. The acid whey may also be concentrated to increase its acidity e.g. by RO. The obtain mixture (1000 kg) of concentrated milk/acid whey having a protein content of about 3.5 % is then fed into a fermentation tank together with a yoghurt culture. After fermentation, the mixture (1000 kg) is fed into a separator. About 350 kg strained yoghurt having a protein content of about 10 % is produced. Furthermore, about 650 kg acid whey is produced as a by-product, of which 500 kg is recirculated into the process (i.e. mixed with concentrated milk) and about 150 kg is discharged as waste.

This process is visualised in Fig. 4.

Compared to the traditional method of producing strained yoghurt as outlined in the Reference Example above, the present method according to the invention, result in about 77 % reduction of waste acid whey.

### Example 4

Milk (1000 kg) having a protein content of 3.5 % is provided and the protein content of the milk is concentrated to about 7% by removal of 500 kg sweet whey by use of UF. The concentrated milk (500 kg) is subjected to pasteurisation and fed into a mixing unit, e.g. an inline mixer or a mixing tank, together with acid whey (500 kg) which has been subjected to high temperature treatment (HTT) in order to kill or destroy bacteriophages to an acceptable level. The acid whey may also be concentrated to increase its acidity e.g. by RO. The obtain mixture (1000 kg) of concentrated milk/acid whey having a protein content of about 3.5 % is then fed into a fermentation tank together with a yoghurt culture. After fermentation, the mixture (1000 kg) is fed into a separator. About 350 kg strained yoghurt having a protein content of about 10 % is produced. Furthermore, about 650 kg acid whey is produced as a by-product, of which 500 kg is recirculated into the process (i.e. mixed with concentrated milk) and about 150 kg is discharged as waste.

This process is visualised in Fig. 5.

Compared to the traditional method of producing strained yoghurt as outlined in the Reference Example above, the present method according to the invention, result in about 77 % reduction of waste acid whey.

## Claims

1. A method of producing a sour dairy product comprising the steps of:
a) providing milk;
b) concentrating the protein content of the milk of step a) by removal of sweet whey by means of microfiltration (MF), ultra filtration (UF) or any combination of MF and UF;
c) providing acid whey;
d)
- subjecting the milk concentrate obtained in step b) to fermentation by addition of a bacterial culture, and mixing the thereby obtained fermented milk concentrate with the acid whey obtained in step c); or
- mixing the milk concentrate obtained in step b) with the acid whey obtained in step c) and subjecting the thereby obtained mixture to fermentation by addition of a bacterial culture;
e) transferring the sour milk/acid whey mixture obtained in step d) to a separator wherein sour dairy product and acid whey are separated; and
f) recirculating a part of the acid whey obtained in step e) to mixing with the milk concentrate before or after fermentation in step d), and discharging the remaining part of the acid whey obtained in step e).

2. The method of claim 1, further comprising pasteurisation of the milk provided in step a), the milk concentrate obtained in step b), or the mixture of milk concentrate and acid whey obtained in the second option of step d).

3. The method of claim 1, further comprising treatment of the acid whey to be mixed with the milk concentrate before fermentation of the obtained mixture in the second option of step d), to enable a reduction of bacteriophages of ≥ log 7, preferably ≥ log 9.

4. The method of claim 3, wherein the treatment is selected from the group consisting of UF, heat treatment or any combination of thereof.

5. The method of claim 4, wherein the UF of the acid whey in the second option of step d) is carried out by using membranes with pore size from 1 kDa to 500 kDa, preferably from 20 kDa to 300 kDa.

6. The method of claim 4, wherein the heat treatment of the acid whey in the second option of step d) is carried out at temperatures from 70 °C to 100 °C in a period of time from 1 second to 20 minutes provided that the lowest temperature requires the longest period of time and vice versa.

7. The method of claim 1, wherein the MF and/or UF in step b) is carried out by using membranes with pore size from 0.05 µm to 0.2 µm in the case of MF and with pore size from 1 kDa to 500 kDa in the case of UF.

8. The method of claim 1, wherein the protein content of the milk concentrate obtained in step b) is in the range from 4 % to 15 %, preferably from 6 % to 12 %, and more preferably from 8 % to 12 %.

9. The method of claim 1, wherein the acid whey in step c) is a by-product from production of sour dairy product.

10. The method of claim 1, wherein the bacterial culture in step d) is a starter culture of lactic acid bacteria.

11. The method of claim 1, wherein the protein content of the sour dairy product is in the range from 2.5 % to 15 %.

12. The method of claim 1, wherein the ratio of milk provided in step a) to remaining part of the acid whey discharged in step f) is in the range from 10:1 to 10:8, from 10:2 to 10:6, or 10:4 to 10:5.

13. The method of claim 1, wherein the sour dairy product is selected from the group consisting of concentrated fermented milk products and fresh cheeses, and other products which are concentrated after fermentation.

14. The method of claim 13, wherein the concentrated fermented milk products are selected from the group consisting of strained yoghurt, Greek yoghurt, labneh and skyr; and wherein the fresh cheeses are selected from the group consisting of cream cheese and quark.

15. The method of claim 1, the sour dairy product is a concentrated fermented milk product selected from the group consisting of strained yoghurt, Greek yoghurt, labneh and skyr.

## Patentansprüche

1. Verfahren zur Herstellung eines sauren Milchprodukts, umfassend die folgenden Schritte:
a) Bereitstellen von Milch;
b) Konzentrieren des Proteingehalts der Milch aus Schritt a) durch Entfernen von Süßmolke mittels Mikrofiltration (MF), Ultrafiltration (UF) oder jeder Kombination aus MF und UF;
c) Bereitstellen von Sauermolke;
d)
- Unterziehen des in Schritt b) erhaltenen Milchkonzentrats einer Fermentierung durch Zugabe einer Bakterienkultur und Mischen des dadurch erhaltenen fermentierten Milchkonzentrats mit der in Schritt c) erhaltenen Sauermolke; oder
- Mischen des in Schritt b) erhaltenen Milchkonzentrats mit der in Schritt c) erhaltenen Sauermolke und Unterziehen der dadurch erhaltenen Mischung einer Fermentierung durch Zugabe einer Bakterienkultur;
e) Überführen der in Schritt d) erhaltenen Sauermilch/Sauermolke-Mischung in einen Separator, in dem das saure Milchprodukt und die Sauermolke getrennt werden; und
f) Rückführen eines Teils der in Schritt e) erhaltenen Sauermolke zur Mischung mit dem Milchkonzentrat vor oder nach der Fermentierung in Schritt d) und Ableiten des restlichen Teils der in Schritt e) erhaltenen Sauermolke.

2. Verfahren nach Anspruch 1, ferner umfassend das Pasteurisieren der in Schritt a) bereitgestellten Milch, des in Schritt b) erhaltenen Milchkonzentrats oder der in der zweiten Auswahlmöglichkeit von Schritt d) erhaltenen Mischung aus Milchkonzentrat und Sauermolke.

3. Verfahren nach Anspruch 1, ferner umfassend das Behandeln der mit dem Milchkonzentrat zu mischenden Sauermolke vor dem Fermentieren der in der zweiten Auswahlmöglichkeit von Schritt d) erhaltenen Mischung, um eine Reduktion der Bakteriophagen von ≥ log 7, vorzugsweise ≥ log 9 zu ermöglichen.

4. Verfahren nach Anspruch 3, wobei die Behandlung aus der Gruppe ausgewählt ist, die aus UF, Hitzebehandlung oder jeder Kombination davon besteht.

5. Verfahren nach Anspruch 4, wobei die UF der Sauermolke in der zweiten Auswahlmöglichkeit von Schritt d) durchgeführt wird, indem Membranen mit einer Porengröße von 1 kDa bis 500 kDa, vorzugsweise von 20 kDa bis 300 kDa, verwendet werden.

6. Verfahren nach Anspruch 4, wobei die Hitzebehandlung der Sauermolke in der zweiten Auswahlmöglichkeit von Schritt d) bei Temperaturen von 70 °C bis 100 °C während eines Zeitraums von 1 Sekunde bis 20 Minuten durchgeführt wird, mit der Maßgabe, dass die niedrigste Temperatur den längsten Zeitraum erfordert und umgekehrt.

7. Verfahren nach Anspruch 1, wobei die MF und/oder UF in Schritt b) durchgeführt wird, indem Membranen mit einer Porengröße von 0,05 µm bis 0,2 µm im Fall von MF und mit einer Porengröße von 1 kDa bis 500 kDa im Fall von UF verwendet werden.

8. Verfahren nach Anspruch 1, wobei der Proteingehalt des in Schritt b) erhaltenen Milchkonzentrats im Bereich von 4 % bis 15 %, vorzugsweise von 6 % bis 12 % und stärker bevorzugt von 8 % bis 12 % liegt.

9. Verfahren nach Anspruch 1, wobei die Sauermolke in Schritt c) ein Nebenprodukt aus der Produktion eines sauren Milchprodukts ist.

10. Verfahren nach Anspruch 1, wobei die Bakterienkultur in Schritt d) eine Starterkultur von Milchsäurebakterien ist.

11. Verfahren nach Anspruch 1, wobei der Proteingehalt des sauren Milchprodukts im Bereich von 2,5 % bis 15 % liegt.

12. Verfahren nach Anspruch 1, wobei das Verhältnis der in Schritt a) bereitgestellten Milch zu dem in Schritt f) abgeleiteten restlichen Teil der Sauermolke im Bereich von 10:1 bis 10:8, von 10:2 bis 10:6 oder von 10:4 bis 10:5 liegt.

13. Verfahren nach Anspruch 1, wobei das saure Milchprodukt aus der Gruppe ausgewählt wird, die aus konzentrierten fermentierten Milchprodukten und Frischkäsen und anderen Produkten, die nach dem Fermentieren konzentriert sind, besteht.

14. Verfahren nach Anspruch 13, wobei die konzentrierten fermentierten Milchprodukte aus der Gruppe ausgewählt sind, die aus Laban, griechischem Joghurt, Labneh und Skyr besteht; und wobei die Frischkäse aus der Gruppe ausgewählt sind, die aus Rahmkäse und Quark besteht.

15. Verfahren nach Anspruch 1, wobei das saure Milchprodukt ein konzentriertes fermentiertes Milchprodukt ist, das aus der Gruppe ausgewählt ist, die aus Laban, griechischem Joghurt, Labneh und Skyr besteht.

## Revendications

1. Procédé de production d'un produit laitier acide, comprenant les étapes consistant à :
a) fournir du lait ;
b) concentrer la teneur en protéines du lait de l'étape a) en enlevant le sérum doux au moyen d'une microfiltration (MF), d'une ultrafiltration (UF) ou de toute combinaison de MF et UF ;
c) fournir un sérum acide ;
d)
- soumettre le concentré de lait obtenu à l'étape b) à une fermentation par addition d'une culture bactérienne, et mélanger le concentré de lait fermenté ainsi obtenu avec le sérum acide obtenu à l'étape c) ; ou
- mélanger le concentré de lait obtenu à l'étape b) avec le sérum acide obtenu à l'étape c) et soumettre le mélange ainsi obtenu à une fermentation par addition d'une culture bactérienne ;
e) transférer le mélange lait acide/sérum acide obtenu à l'étape d) à un séparateur dans lequel le produit laitier acide et le sérum acide sont séparés ; et
f) recirculer une partie du sérum acide obtenu à l'étape e) en mélangeant avec le concentré de lait avant ou après la fermentation à l'étape d), et rejeter la partie restante du sérum acide obtenu à l'étape e).

2. Procédé selon la revendication 1, comprenant en outre la pasteurisation du lait fourni à l'étape a), du concentré de lait obtenu à l'étape b) ou du mélange de concentré de lait et de sérum acide obtenu à la seconde option de l'étape d).

3. Procédé selon la revendication 1, comprenant en outre le traitement du sérum acide devant être mélangé avec le concentré de lait avant la fermentation du mélange obtenu à la seconde option de l'étape d), pour permettre une réduction des bactériophages d'un facteur ≥ à log 7, de préférence d'un facteur ≥ à log 9.

4. Procédé selon la revendication 3, dans lequel le traitement est choisi dans le groupe constitué par UF, traitement thermique ou toute combinaison de ceux-ci.

5. Procédé selon la revendication 4, dans lequel l'UF du sérum acide à la seconde option de l'étape d) est mise en oeuvre en utilisant des membranes ayant une taille de pore de 1 kDa à 500 kDa, de préférence de 20 kDa à 300 kDa.

6. Procédé selon la revendication 4, dans lequel le traitement thermique du sérum acide à la seconde option de l'étape d) est mis en oeuvre à des températures de 70 °C à 100 °C dans une période de temps de 1 seconde à 20 minutes étant entendu que la température la plus basse nécessite la période de temps la plus longue et *vice versa.*

7. Procédé selon la revendication 1, dans lequel la MF et/ou l'UF à l'étape b) est mise en oeuvre en utilisant des membranes ayant une taille de pore de 0,05 µm à 0,2 µm dans le cas de la MF et ayant une taille de pores de 1 kDa à 500 kDa dans le cas de l'UF.

8. Procédé selon la revendication 1, dans lequel la teneur en protéines du concentré de lait obtenu à l'étape b) est dans la gamme de 4 % à 15 %, de préférence de 6 % à 12 % et de préférence encore de 8 % à 12 %.

9. Procédé selon la revendication 1, dans lequel le sérum acide à l'étape c) est un sous-produit de la production d'un produit laitier acide.

10. Procédé selon la revendication 1, dans lequel la culture bactérienne à l'étape d) est une culture de départ de bactéries lactiques.

11. Procédé selon la revendication 1, dans lequel la teneur en protéines du produit laitier acide est dans la gamme de 2,5 % à 15 %.

12. Procédé selon la revendication 1, dans lequel le rapport du lait fourni à l'étape a) à la partie restante du sérum acide rejeté à l'étape f) est dans la gamme de 10:1 à 10:8, de 10:2 à 10:6, ou 10:4 à 10:5.

13. Procédé selon la revendication 1, dans lequel le produit laitier acide est choisi dans le groupe constitué par les produits laitiers fermentés concentrés et les fromages à pâte fraîche, et d'autres produits qui sont concentrés après fermentation.

14. Procédé selon la revendication 13, dans lequel les produits laitiers fermentés concentrés sont choisis dans le groupe constitué par le yaourt filtré, le yaourt grec, le labneh et le skyr ; et dans lequel les fromages à pâte fraîche sont choisis dans le groupe constitué par le fromage à la crème et le quark.

15. Procédé selon la revendication 1, dans lequel le produit laitier acide est un produit laitier concentré fermenté choisi dans le groupe constitué par le yaourt filtré, le yaourt grec, le labneh et le skyr.
